# EUROPÄISCHE PATENTSCHRIFT

(11) **EP 0 276 411 B1**
(45) Veröffentlichungstag und Bekanntmachung des Hinweises auf die Patenterteilung: **15.06.1994**
(21) Anmeldenummer: 87117800.0
(22) Anmeldetag: 02.12.1987
(51) Int. Cl.: F16H 61/52

(54) **Hydrodynamischer Drehmomentwandler, insbesondere für Kraftfahrzeuge**
Hydrodynamic torque converter, especially for motor vehicle
Convertisseur de couple hydrodynamique pour véhicule automobile

(30) Priorität: 29.01.1987 DE 3702548
(43) Veröffentlichungstag der Anmeldung: 03.08.1988
(73) Patentinhaber: FORD-WERKE AKTIENGESELLSCHAFT, 50725 Köln (DE); FORD FRANCE SOCIETE ANONYME, 92506 Rueil Malmaison Cedex (FR); FORD MOTOR COMPANY LIMITED, Brentwood, Essex CM13 3BW (GB)
(72) Erfinder: Wirtz, Hans-Peter, D-5000 Köln 71 (DE)
(74) Vertreter: Messulam, Alec Moses

(56) Entgegenhaltungen:
- DE-A- 2 905 738
- FR-A- 2 008 038
- PATENT ABSTRACTS OF JAPAN vol. 7, no. 221 (M-246)(1366) 30 September 1983,& JP-A-58 113658 (MITSUBISHI) 06 Juli 1983,
- PATENT ABSTRACTS OF JAPAN vol. 10, no. 77 (M-464)(2134) 26 März 1986,
- & JP-A-60 220259 (TOYOTA) 02 November 1985,
- PATENT ABSTRACTS OF JAPAN vol. 7, no. 141 (M-223)(1286) 21 Juni 1983,& JP-A-58 054269 (MITSUBISHI) 31 März 1983,

## Beschreibung

Die Erfindung bezieht sich auf einen hydrodynamischen Drehmomentwandler, insbesondere für Kraftfahrzeuge, der im Oberbegriff des Patentanspruches erläuterten Art.

Aus der DE-A- 23 50 600 ist ein hydrodynamischer Drehmomentwandler mit zumindest einem Pumpen-, einem Turbinen- und einem Leitrad und mit veränderbarem Schaufelgitter an zumindest einem dieser Räder, vorzugsweise am Leitrad in der Weise bekannt, daß es durch das von der Umlaufströmung ausgeübte Drehmoment gegen Federkraft selbsttätig verstellbar ist.

Bei dem bekannten Drehmomentwandler sind die Schaufeln des Leitrades auf radialen Drehzapfen verschwenkbar angeordnet, die über abgekröpfte Schwenkarme auf einen axial beweglichen Stellring und dahinterliegende konzentrische Tellerfedern einwirken. Die Lage der Federn ist hierbei so gewählt, daß das durch die Umlaufströmung ausgeübte Drehmoment im Anfahrpunkt das Schaufelgitter des Laufrades öffnet.

Dadurch soll die Wandlerleistungszahl derart verändert werden, daß die Anfahrdrehzahl bei Vollast niedrig, bei Leerlaufdrehzahl das Kriechmoment klein und die Lage des Kupplungspunktes und der Wirkungsgrad gut ist.

Der bekannte Drehmomentwandler ist in seinem Aufbau jedoch verhältnismäßig aufwendig und teuer.

Aus der DE-C- 25 05 092 ist ein weiterer hydrodynamischer Drehmomentwandler bekannt, bei dem ein auf einem Freilauf abgestütztes Leitrad ein sich unter dem von der Umlauf-Strömung ausgeübten Drehmoment entgegen einer Federkraft den Öffnungssinn selbsttätig einstellendes Schaufelgitter aufweist.

Das Schaufelgitter des Leitrades soll hierbei wieder im Anfahrpunkt bei Vollast offen und damit die Wanderleistungszahl groß während es im Leerlauf nahezu geschlossen ist, so daß die Wandlerleistungszahl und damit das Kriechmoment klein ist.

Der bekannte Drehmomentwandler weist durch die gleichfalls wieder drehbaren Schaufeln des Leitrades einen aufwendigen und teuren Aufbau auf.

Aus der Veröffentlichung JP-A- 58 113 658 (Patents Abstracts of Japan, M-246 September 30, 1983 Vol. 7/221) ist ein hydrokinetischer Drehmomentwandler mit zumindest einem Pumpen-, einem Turbinen- und einem Leitrad, dessen Schauffelgitter in wenigstens zwei entlang einer senkrechten Ebene zu seiner Achse unterteilte relativ zueinander um etwa eine halbe Schaufelteilung verdrehbare Ringkörper geteilt ist, bekannt, wobei der im Eintrittsbereich des Schaufelgitters liegende Ringkörper durch das Drehmoment einer Federkraft entgegen dem Drehmoment der Leerlauf-Umlaufströmung so weit verdreht werden kann, daß der Eintrittsquerschnitt des Schaufelgitters reduziert wird und damit der Wirkungsgrad des Drehmomentwandlers im Leerlaufbereich so verschlechtert wird, daß eine Kriechneigung des mit dem hydrokinetischen Drehmomentwandler verbundenen Kraftfahrzeuggetriebes vermindert wird.

Wird die Drehzahl des Antriebsmotors auf eine Anfahrdrehzahl erhöht, so wird der verdrehbare Ringkörper durch das Drehmoment der Umlaufströmung im Anfahrpunkt entgegen der Federkraft verdreht und an einem Anschlag angelegt, der sicherstellt, daß der verdrehbare Ringkörper mit dem feststehenden Ringkörper entsprechend fluchtet und dementsprechend für den Anfahrbereich die volle gewünschte Drehmomentvervielfachung erzielt wird.

Die Aufgabe der Erfindung ist abweichend von den Bestrebungen des Standes der Technik, Wandlerkennwerte im Anfahrbereich zu verschlechtern, derart, daß ein bestimmtes Drehmomentverhältnis nicht überschritten, die für die Abstimmung Wandler/Motor wichtige Wandler-Leistungszahl - Steigung der Wandlerparabel - dabei aber nicht verändert wird.

Der Zweck dieser Maßnahme ist es, eine Kombinationsvielfalt innerhalb der Großserienproduktion sicherzustellen, indem man einen leistungsfähigen Verbrennungsmotor mit hohem Drehmoment mit einem automatischen Getriebe einer bestimmten Drehmomentkapazität mittels eines gemäß der Erfindung angepaßten hydrodynamischen Drehmomentwandlers verbinden kann, ohne daß es durch das hohe Drehmoment des Verbrennungsmotors und einer im Anfahrpunkt hohen Drehmomenterhöhung im Drehmomentwandler zu einer unerwünschten Überbelastung des automatischen Getriebes kommt.

Gemäß der Erfindung wird diese Aufgabe gelöst, indem bei einem hydrodynamischen Drehmomentwandler gemäß dem Oberbegriff des Patentanspruches die im Kennzeichenteil des Patentanspruches aufgezeigten Merkmale angewendet werden.

Aus der DE-AS 19 56 244 ist zwar bereits ein Schaufelgitter eines Leitrades bekannt, das in wenigstens zwei entlang eines Kreises radial unterteilte, relativ zueinander um etwa eine halbe Schaufelteilung verdrehbare Ringkörper geteilt ist, diese beiden Ringkörper werden jedoch über einen außerhalb des Arbeitskreislaufes angeordneten Hydraulikzylinder betätigt.

Die Erfindung wird anhand eines in der beiliegenden Zeichnung gezeigten Ausführungsbeispieles näher erläutert. Es zeigt:
- Fig. 1: einen vertikalen Teilschnitt durch die obere Hälfte eines hydrodynamischen Drehmomentwandlers, wie er für Kraftfahrzeuge verwendet wird, mit der erfindungsgemäßen Modifizierung;
- Fig. 2: eine Teilansicht auf das Leitrad in Richtung des Pfeiles II in Figur 1;
- Fig. 3: einen Teilschnitt entlang der Linie III-III in Figur 2;
- Fig. 4: einen Teilschnitt entlang der Linie IV -IV in Figur 1;
- Fig. 5: einen ähnlichen Teilschnitt wie Fig. 3 durch eine weitere Ausführungsform und

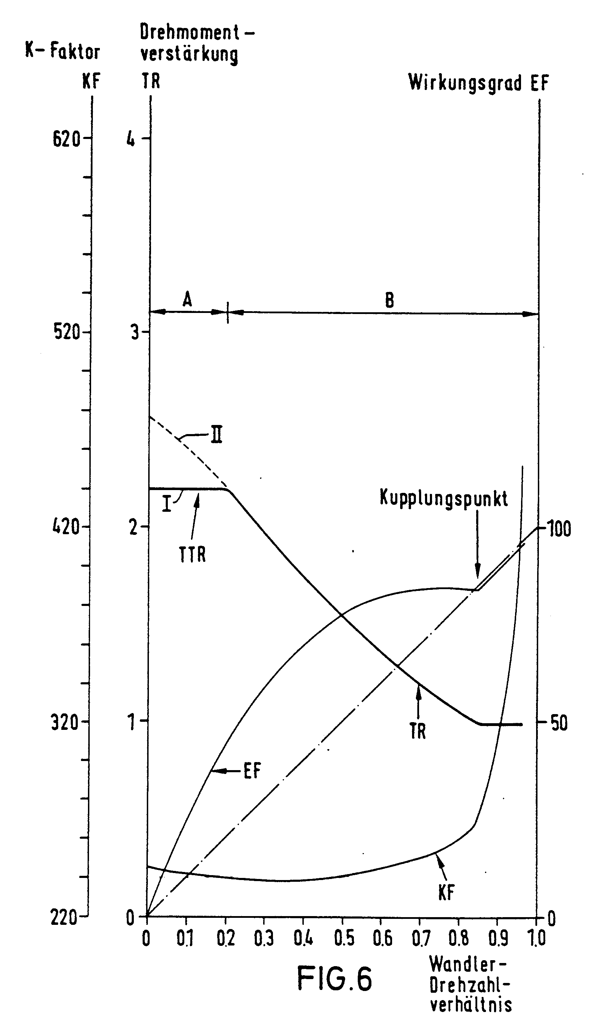

- Fig. 6: ein Diagramm mit den Kennwerten des hydrodynamischen Drehmomentwandlers der Erfindung.

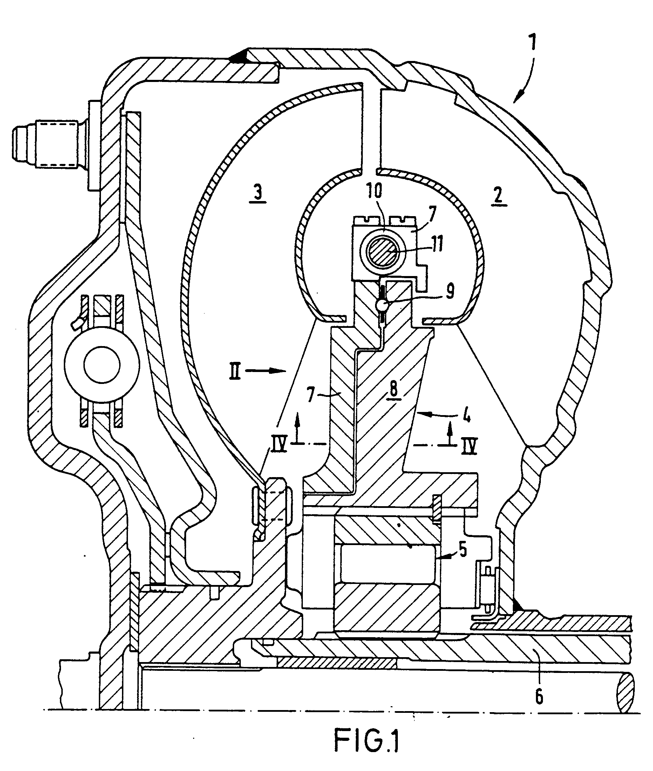

Der in Figur 1 in seiner oberen Hälfte gezeigte hydrodynamische Drehmomentwandler 1 besteht in üblicher Weise aus einem Pumpenrad 2, einem Turbinenrad 3 und einem Leitrad 4, das in üblicher Weise über einen Freilauf 5 auf einem Gehäuseansatz 6 abgestützt ist.

Das Leitrad 4 besteht gemäß der Erfindung aus zwei entlang einer senkrechten Ebene zu seiner Achse unterteilte, relativ zueinander um etwa eine halbe Schaufelteilung verdrehbare Ringkörper 7 und 8, die über eine Axialkugellageranordnung 9 oder, in nicht gezeigter Weise, über eine Gleitlagerung relativ aneinander abgestützt sind.

Der Ringkörper 8 des Leitrades 4 ist hierbei ein Teil der Nabenanordnung, während der Ringkörper 7 relativ zu diesem verdrehbar ist.

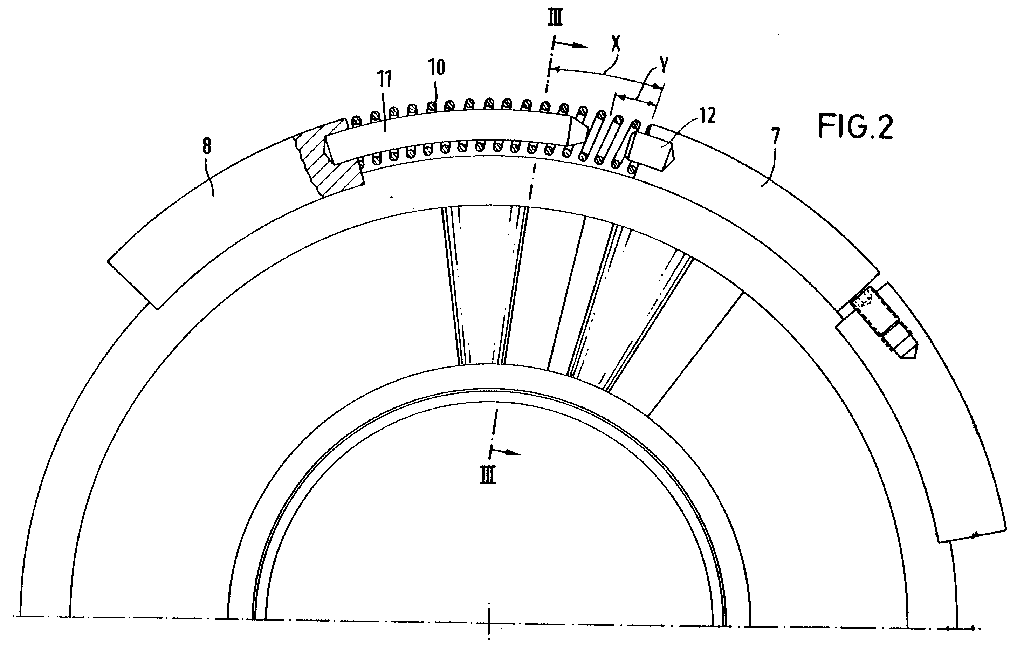

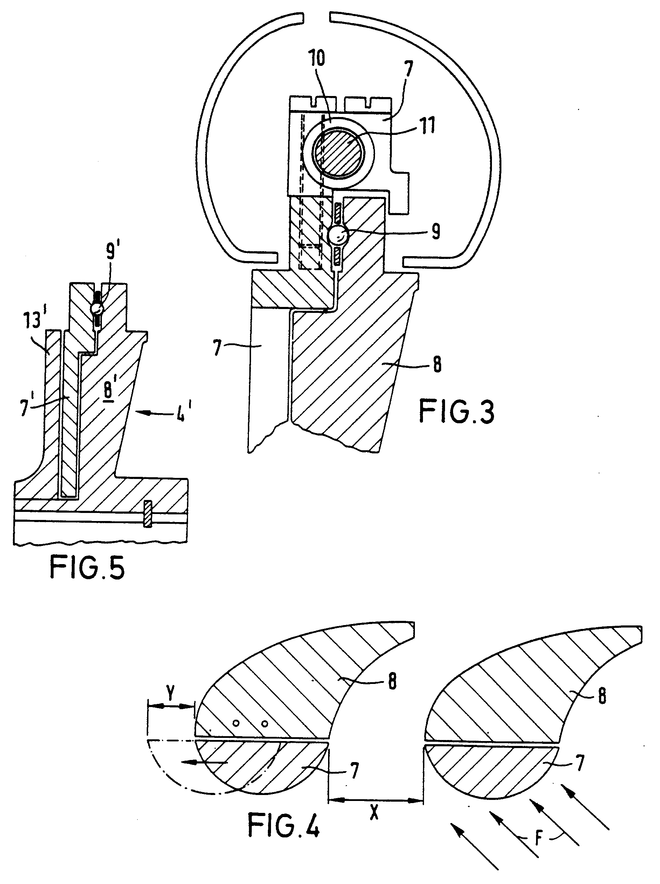

Wie aus Figur 2 und Figur 3 zu ersehen ist, ist eine in Umfangsrichtung liegende Schraubenfeder 10 am Ringkörper 8 über einen Dorn 11 geführt und stützt sich am Ringkörper 7, in Ausgangslage der Verstelleinrichtung eine Vorspannkraft erzeugend, mittels eines Zapfens 12 zentriert ab.

Wie aus den Figuren 2 und 4 zu ersehen ist, bildet der Ringkörper 7 die Nasenrundung der flügelförmigen Schaufel 7/8 während der Ringkörper 8 den Flügelteil bildet. Wie aus der Zusammenschau der Ansicht der Figur 2 und des Schnittes der Figur 4 zu ersehen ist, weist das Leitrad 4 eine Eintrittsöffnung von einer Winkelerstreckung X auf, die unter der Wirkung des von der durch Pfeile F angedeuteten Umlaufströmung auf die Nasenrundung ausgeübten Drehmomentes ab einer gewissen Höhe um die Winkelerstrekung Y verringert wird, sobald sich der Ringkörper 7 entgegen der Kraft der Schraubenfeder 10 relativ zum Ringkörper 8 verdreht.

In nach einer weiteren in Fig. 5 gezeigten Ausführungsform sind auch andere Teilungen des Leitrades 4ʹ möglich. Wie aus Figur 5 zu ersehen ist, bildet ein Ringkörper 13 die Nasenrundung und ist mit dem Ringkörper 8ʹ der den hinteren Flügelteil des feststehenden Leitradteiles bildet verbunden, während der bewegliche Ringkörper 7ʹ einen Scheibenteil bildet, der unter dem Einfluß der Umlaufströmung um die Winkelerstreckung Y verlagerbar ist.

Damit wird die in erster Linie von der Konfiguration des Leitrades bewirkte Drehmomentverstärkung im Anfahrpunkt schlechter oder begrenzt, so daß eine Überbeanspruchung des automatischen Getriebes durch ein zu hohes eingeleitetes Anfahrdrehmoment sicher vermieden wird. Sobald der hydrodynamische Drehmomentwandler den Anfahrpunkt verläßt, verändert sich der Anströmwinkel der Umlaufströmung auf das Leitrad und verringert sich damit das Drehmoment auf den beweglichen Ringkörper des Leitrades. Dieser stellt sich somit durch die Kraft der Schraubenfeder 10 mit zunehmendem Wandler-Drehzahlverhältnis kontinuierlich wieder auf die ursprüngliche Eintrittsöffnung des Leitrades zurück. Damit wird, wie aus dem Diagramm Fig. 5 zu ersehen ist, wie erwünscht, eine reduzierte und im Anfahrbereich konstante Drehmomentverstärkung erzielt, Bereich A, Kennlinienast I.

Das erfindungsgemäße Leitrad verhält sich im weiteren Bereich B der Funktion des hydrodynamischen Drehmomentwandlers wie ein herkömmliches Leitrad, d.h., es erzeugt nach der erfolgten Rückstellung des beweglichen Ringkörpers 5 wieder die Kennlinie der ursprünglich hohen Drehmomentverstärkung und wird bei Erreichen des Kupplungspunktes des Drehmomentwandlers infolge seiner Abstützung auf einem Freilauf frei in der Umlaufströmung mitlaufen.

Im Teillastbereich erfolgt keine Verstellung des Leitrades, da sich mit verringertem Motormoment auch die Wandlerdrehzahl, als Folge die Geschwindigkeit der Umlaufströmung und damit die Kraft auf den beweglichen Ringkörper verringert und unterhalb der Rückstellkraft der Feder bleibt. Im besagten Teillastbereich ist somit die hohe Drehmomentverstärkung eines üblichen Leitrades, siehe Diagramm Fig. 5, Kennlinienast II, gültig.

## Patentansprüche

1. Hydrodynamischer Drehmomentwandler, insbesondere für Kraftfahrzeuge, mit zumindest einem Pumpen- (2), einem Turbinen- (3) und einem Leitrad (4), dessen Schaufelgitter in wenigstens zwei entlang einer senkrechten Ebene zu seiner Achse unterteilte, relativ zueinander um etwa eine halbe Schaufelteilung verdrehbare Ringkörper (7 und 8) geteilt ist, wobei der im Eintrittsbereich des Schaufelgitters liegende Ringkörper (7) durch das Drehmoment der Umlaufströmung (F) entgegen einer Federkraft (10) drehbar und an einem Anschlag (11/12) anlegbar ist,
**dadurch gekennzeichnet**, daß
- der verdrehbare Ringkörper (7; 7')
- durch die Federkraft (Schraubenfeder 10) in seiner mit dem feststehenden Ringkörper (8; 8') ausgerichteten Lage gehalten wird, wobei die hohe Drehmomentverstärkung im Teillastbereich erfolgt (Kennlinie II, Fig. 6),
- durch das höhere Drehmoment der Umlaufströmung (F) auf den verdrehbaren Ringkörper gegen die Federkraft verdrehbar und an den Anschlag (Dorn 11) anlegbar ist, wobei der Eintrittsquerschnitt des Schaufelgitters verringert und die Drehmomentverstärkung reduziert wird (Kennlinie I, Fig. 6).

2. Hydrodynamischer Drehmomentwandler nach Anspruch 1, **dadurch gekennzeichnet**, daß der verdrehbare Ringkörper (7) gegenüber dem feststehenden Ringkörper (8 bzw. 8') des Leitrades (4 bzw 4') über eine gleichmäßig am Umfang angeordnete Axialkugellageranordnung (9 bzw 9') abgestützt ist.

3. Hydrodynamischer Drehmomentwandler nach den Ansprüchen 1 und 2, **dadurch gekennzeichnet**, daß die die Federkraft bereitstellende in Umfangsrichtung angeordnete Schraubenfeder (10) am feststehenden Ringkörper (8) über einen Dorn (11) geführt und in ihrer Abstützung am beweglichen Ringkörper (7) über einen Zapfen (12) zentriert ist.

## Claims

1. A hydrodynamic torque converter, in particular for motor vehicles, with at least one pump wheel (2), one turbine wheel (3) and one guide wheel (4), the blade row of which is divided into at least two annular members (7 and 8) which are divided along a plane perpendicular to the axis of the guide wheel and which are rotatable relative to each other about approximately half a blade pitch, wherein the annular member (7) disposed in the inlet region of the blade row can be rotated by the torque of the circulating flow (F) against the force of a spring (10) and can be positioned against a stop (11/12), characterized in that
- the rotatable annular member (7; 7')
- is held by the spring force (helical screw 10) in its position orientated with the stationary annular member (8; 8'), the high degree of torque amplification occurring in the partial load range (characteristic curve II, Fig. 6),
- can be rotated by the higher torque of the circulating flow (F) on the rotatable annular member against the spring force and can be positioned against the stop (tongue 11), the entry cross-section of the blade row being reduced and the torque amplification being reduced (characteristic curve I, Fig. 6).

2. A hydrodynamic torque converter according to Claim 1, characterized in that the rotatable annular member (7) is supported relative to the stationary annular member (8 or 8' respectively) of the guide wheel (4 or 4' respectively) by way of an axial ball bearing arrangement (9 or 9' respectively) provided uniformly on the periphery.

3. A hydrodynamic torque converter according to Claims 1 and 2, characterized in that the helical spring (10) providing the spring action and arranged in the peripheral direction is guided on the stationary annular member (8) by way of a tongue (11) and in its support on the movable annular member (7) it is centred by way of a pin (12).

## Revendications

1. Convertisseur de couple hydrodynamique, en particulier pour véhicules automobiles, comprenant au moins une roue de pompe (2), une roue de turbine (3) et un diffuseur (4) dont la grille des aubes profilées est divisée en deux corps annulaires au moins (7 et 8) qui sont divisés selon un plan perpendiculaire à son axe et qui peuvent tourner l'un par rapport à l'autre d'environ la moitié du pas des aubes, cependant que le corps annulaire (7) qui est situé dans la zone d'entrée de la grille des aubes profilées peut tourner à l'encontre d'une force élastique (10), du fait du couple de l'écoulement circulant (F), et qu'il peut s'appuyer sur une butée (11/12), caractérisé par le fait que le corps annulaire tournant (7 ; 7') :
- est maintenu par la force élastique (ressort hélicoïdal 10) dans sa position où il est aligné sur le corps annulaire fixe (8 ; 8'), l'amplification élevée du couple ayant lieu dans la zone de charge partielle (courbe caractéristique Il, figure 6),
- peut tourner à l'encontre de la force élastique du fait du couple plus élevé exercé par l'écoulement circulant (F) sur le corps annulaire tournant, et peut s'appuyer sur la butée (tenon 11), la section transversale d'entrée de la grille des aubes profilées étant diminuée et l'amplification du couple étant réduite (courbe caractéristique I, figure 6).

2. Convertisseur de couple hydrodynamique selon la revendication 1, caractérisé par le fait que le corps annulaire tournant (7) est appuyé par rapport au corps annulaire fixe (8, respectivement 8') du diffuseur (4, respectivement 4') par l'intermédiaire d'un dispositif à palier de butée à billes (9, respectivement 9') qui est disposé régulièrement sur le pourtour.

3. Convertisseur de couple hydrodynamique selon les revendications 1 et 2, caractérisé par le fait que le ressort hélicoïdal (10) qui est disposé dans la direction de la périphérie et qui assure la présence de la force élastique est guidé sur le corps annulaire fixe (8) par l'intermédiaire d'un noyau (11), et qu'il est centré par l'intermédiaire d'un tenon (12) dans son appui sur le corps annulaire mobile (7).
